# EUROPÄISCHE PATENTSCHRIFT

(11) **EP 1 812 278 B1**
(45) Veröffentlichungstag und Bekanntmachung des Hinweises auf die Patenterteilung: **04.11.2009**
(21) Anmeldenummer: 05784886.3
(22) Anmeldetag: 03.09.2005
(51) Int. Cl.: B62D 53/08, B62D 53/06, B62D 35/00

(54) **VERSTELLVORRICHTUNG ZUR VERRINGERUNG DES LUFTWIDERSTANDES EINES SATTELZUGES**
ADJUSTING DEVICE ENABLING AERODYNAMIC RESISTANCE OF A SEMI-TRAILER TRACTOR TO BE REDUCED
DISPOSITIF DE REGLAGE POUR LA REDUCTION DE LA RESISTANCE AERODYNAMIQUE POUR TRACTEUR DE SEMI-REMORQUE

(30) Priorität: 18.09.2004 DE 102004045662
(43) Veröffentlichungstag der Anmeldung: 01.08.2007
(60) Teilanmeldung: 09161464.4
(73) Patentinhaber: Jost-Werke GmbH, 63263 Neu-Isenburg (DE)
(72) Erfinder: ALGUERA, José, 63739 Aschaffenburg (DE)
(74) Vertreter: Fuchs
(86) Internationale Anmeldenummer: PCT/EP2005/009483
(87) Internationale Veröffentlichungsnummer: WO 2006/029732

(56) Entgegenhaltungen:
- EP-A- 1 031 497
- EP-A- 1 561 676
- FR-A- 2 625 472
- GB-A- 2 128 950
- US-A- 4 904 015
- US-A- 5 915 713
- PATENT ABSTRACTS OF JAPAN Bd. 2003, Nr. 02, 5. Februar 2003 (2003-02-05) -& JP 2002 302073 A (HINO MOTORS LTD), 15. Oktober 2002 (2002-10-15)
- PATENT ABSTRACTS OF JAPAN Bd. 2003, Nr. 07, 3. Juli 2003 (2003-07-03) -& JP 2003 089365 A (HINO MOTORS LTD), 25. März 2003 (2003-03-25)

## Beschreibung

Die Erfindung betrifft eine Verstellvorrichtung für eine Sattelkupplung gemäß dem Oberbegriff des Patentanspruchs 1.

Verschiebevorrichtungen sind beispielsweise aus der DE-AS 17 80 488, der EP 0 503 954 A1 oder der DE 199 44 684 C1 bekannt.

Ferner ist aus der WO 02/070328 A1 eine Verschiebevorrichtung bekannt, die zwei Führungsschienen mit Zahnleisten aufweist, auf denen ein Schlitten verschiebbar gelagert ist, der eine Sattelkupplung trägt. Am Schlitten ist eine Verriegelungseinrichtung mit Blockierstücken angeordnet, die in die Zahnleisten eingreifen.

Die bisher bekannten Verschiebeeinrichtungen sind dafür ausgelegt, vor Beginn der Fahrt eine Anpassung an die Auslegung von Zugfahrzeug und Auflieger vorzunehmen. Es hat sich jedoch gezeigt, dass der Spalt oder Zwischenraum, der zwischen der Aufliegerfront und dem Fahrerhaus der Zugmaschine entsteht, während der Fahrt zu aerodynamischen Verwirbelungen führt, die den Luftwiderstand und somit den Kraftstoffverbrauch des Sattelzuges beeinflussen.

Um diesem Effekt entgegenzuwirken, werden häufig Windabweiser verwendet, um die Luft gezielt über den Spalt zu leiten. Diese sind schwer, teuer und fest installiert. Ein Umbau muss manuell durchgeführt wird, was ist in der Regel nur vom Zwischenraum aus möglich ist.

Es ist grundsätzlich sinnvoll, diesen Spalt oder Zwischenraum so klein wie möglich zu gestalten. Andererseits könnte ein zu kleiner Spalt wiederum dazu führen, dass bei Kurvenfahrt die Ecken des Sattelanhängers gegen die Rückwand des Fahrerhauses schlagen.

Auch kann es Situationen geben, bei denen es sinnvoll ist, einen großen Spalt zuzulassen, um beispielsweise Platz für Aggregate zu schaffen oder im Stand die Zugänglichkeit zu den Versorgungsleitungen für den Sattelanhänger zu verbessern.

Mit der beispielsweise aus der JP 2002 302 073 A bekannten Verschiebeeinrichtungen ist zwar ein Verschieben des Aufliegers möglich, der Fahrer muss jedoch die Mechanik der Verschiebeeinrichtung öffnen, dann das Spaltmaß durch Verfahren der Zugmaschine verändern, die Mechanik wieder verriegeln und sich von deren ordnungsgemäßen Verriegelungszustand überzeugen. Dieser Vorgang erfordert einiges an Übung und kann zu erheblicher körperlicher Belastung bei den Fahrern führen. Zudem ist dies immer nur möglich, während das Fahrzeug steht, nicht aber während der Fahrt.

Eine alternative Verschiebeeinrichtung offenbart die US 5,915,713, bei welcher ein unter der Kupplungsplatte angeordneter Schlitten mittels einer Handkurbel in der Fahrzeuglängsachse verstellt werden kann. Dieses Verstellen ist jedoch nur im Stillstand bei abgesatteltem Auflieger möglich.

Es ist daher Aufgabe der Erfindung, eine Vorrichtung sowie ein Steuergerät bereitzustellen, mit denen es möglich ist, auch während der Fahrt die Position des Aufliegers relativ zum Zugfahrzeug zu verändern, insbesondere den Luftwiderstand des Sattelzugs bei hohen Geschwindigkeiten zu reduzieren.

Die Aufgabe wird mit einer Verstellvorrichtung gelöst, bei der die Betätigungseinrichtung zum Verschieben des Schlittens eine motorische Antriebseinrichtung mit mindestens einer Antriebsspindel und einer Spindelmutter umfasst, wobei während des Verstellens des Schlittens der Formschluss zwischen Spindelmutter und Antriebsspindel erhalten bleibt, und bei der mindestens ein Positionssensor zur Erkennung der Schlittenposition vorgesehen ist, wobei der Positionssensor und die Antriebseinrichtung an eine Steuereinrichtung angeschlossen sind.

Aufgrund der Beibehaltung des Formschlusses wird die Mechanik der Verschiebeeinrichtung nicht geöffnet, so dass der Schlitten auch während des Verschiebens zu jeder Zeit gesichert ist. Der Auflieger kann somit gegenüber dem Zugfahrzeug nicht unkontrolliert verschieben und Schaden anrichten.

Durch die motorische Antriebseinrichtung wird es erstmals möglich, die Position der Sattelkupplung auch während der Fahrt zu verändern. Das Spaltmaß, also die Größe des Zwischenraums zwischen dem Fahrerhaus und dem Auflieger, ist in Abhängigkeit der Fahrsituation individuell anpassbar, so dass der Abstand bei langsamer Fahrt, z.B. beim Rangierbetrieb, oder im Stand groß und bei schneller Autobahnfahrt klein ist. Die Verwirbelungen im Zwischenraum zwischen Fahrerhaus und Aufliegerfront lassen sich insbesondere bei schneller Fahrt reduzieren, so dass der Luftwiderstand des Sattelzuges insgesamt verringert wird.

Durch den oder die Positionssensoren wird dem Fahrer insbesondere während der Fahrt mitgeteilt, wo sich die Sattelkupplung befindet und wie weit die Verschiebeeinrichtung und somit die Sattelkupplung verschoben werden kann, wobei das Verschieben der Sattelkupplung durch Steuersignale des Fahrers möglich ist oder auch automatisch erfolgen kann. Im letzten Fall können hierfür vorgegebene Werte in der Steuereinrichtung für die jeweilige Fahrsituation abgelegt sein.

Die Steuereinrichtung umfasst vorzugsweise eine Anzeigeeinrichtung, die als optische und/oder akustische Anzeige ausgebildet sein kann und vorzugsweise im Fahrerhaus platziert ist. Die Anzeigeeinrichtung kann permanent aktiv sein, d.h. die Position der Sattelkupplung wird dauerhaft angezeigt. Es kann auch eine Kopplung mit der Fahrzeugzündung vorgesehen sein, so dass beim Einschalten der Zündung die aktuelle Stellung der Sattelkupplung bzw. des Schlittens angezeigt wird.

Antriebseinrichtungen, die den erforderlichen Formschluss gewährleisten, sind solche, die über mindestens eine Antriebsspindel mit Spindelmutter verfügen.

Die Spindelmutter ist vorzugsweise am Schlitten angeordnet.

Der Ort und die Art des Positionssensors hängen von der jeweiligen baulichen Ausgestaltung der Verstellvorrichtung ab.

Der Positionssensor kann beispielsweise ein Abstandssensor sein. Der Positionssensor kann auch ein Drehwinkelmesser sein.

Es ist auch möglich, mindestens zwei erste Positionssensoren an einer Führungsschiene anzuordnen. Vorzugsweise sind die Positionssensoren in diesem Fall induktive Sensoren.

Vorzugsweise umfasst die Steuereinrichtung eine Kontrolleinrichtung, die vorzugsweise die Funktionsfähigkeit des oder der Positionssensoren und gegebenenfalls weiterer elektronischer Bauteile überprüft.

Die Steuereinrichtung ist vorzugsweise zur Auswertung der Positionssignale des/der Positionssensors(en) ausgebildet, wobei nach Vergleich mit Sollwerten Steuersignale an die Antriebseinrichtung abgegeben werden. Es wird dadurch ein automatischer Betrieb möglich, in den der Fahrer nicht eingreifen muss. Die Sollwerte können beispielsweise an die Fahrgeschwindigkeit geknüpft sein, so dass bei schneller Fahrt auf der Autobahn aufgrund eines Sollwertes für den Spaltabstand die Sattelkupplung mittels der Verstelleinrichtung derart nach vorne verschoben wird, dass der Spalt minimiert wird.

Die Steuereinrichtung kann gemäß einer weiteren Ausführungsform auch einen Regelkreis aufweisen. Anhand von Kennlinien wird z. Bsp. je nach Fahrbedingungen die Verstellvorrichtung nachgeführt.

Beispielhafte Ausführungsformen der Erfindung werden nachfolgend anhand der Zeichnungen näher erläutert.

Es zeigen:
- Figuren 1 und 2: Seitenansichten eines Sattelzuges mit unterschiedlichen Aufliegerpositionen,
- Figur 3: eine Seitenansicht einer Verschiebeeinrichtung,
- Figur 4: eine perspektivische Draufsicht auf eine Verschiebeeinrichtung,
- Figur 5: ein Block-Schaltbild eines Steuergerätes.

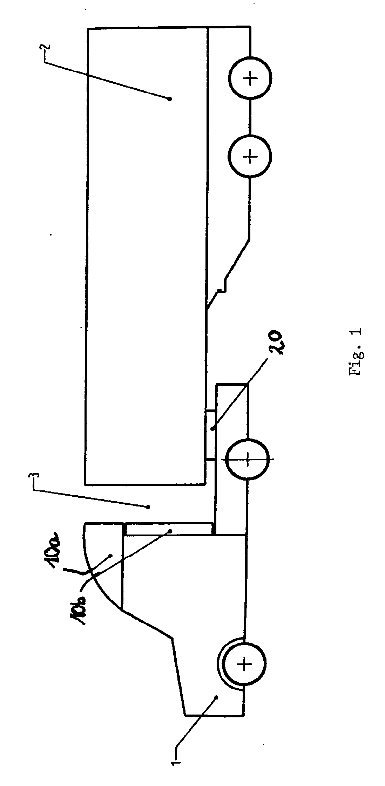

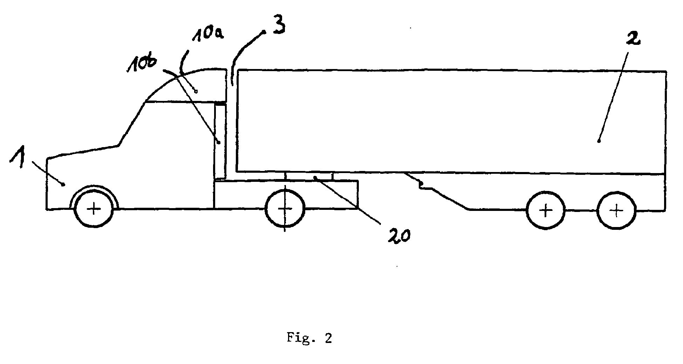

In den Figuren 1 und 2 ist jeweils ein Sattelzug bestehend aus einem Zugfahrzeug 1 und einem Auflieger 2 in verschiedenen Positionen dargestellt. Das Zugfahrzeug 1 besitzt eine Verstellvorrichtung 20 mit einer darauf angeordneten Sattelkupplung 5, in die der Auflieger 2 mit seinem Königszapfen eingreift. In den Figuren 1 und 2 ist die Sattelkupplung 5 nicht, und die Verstellvorrichtung 20 nur schematisch dargestellt. Ferner besitzt das Zugfahrzeug 1 auf seinem Dach 4 einen verschwenkbaren Windabweiser 10a sowie seitliche Windabweiser 10b am Fahrerhaus.

In der Figur 1 befindet sich der Auflieger 2 in einer Position, bei der die Oberkante des Aufliegers auf gleicher Höhe liegt wie der Scheitel des Windabweisers 10a. In dieser Anordnung ist der Zwischenraum 3 zwischen dem Fahrerhaus 1 und der Vorderfront des Aufliegers 2 relativ groß, so dass es in diesem Zwischenraum bei schneller Autobahnfahrt zu Verwirbelungen kommt, die das Fahrzeug bremsen. Um hier Abhilfe zu schaffen, ist es möglich, mittels der Verstellvorrichtung 20 die Sattelkupplung nach links zu verschieben, so dass der Zwischenraum 3 entsprechend kleiner wird, wie dies in der Figur 2 dargestellt ist.

Die gezeigten Positionsänderungen können während der Fahrt durchgeführt werden.

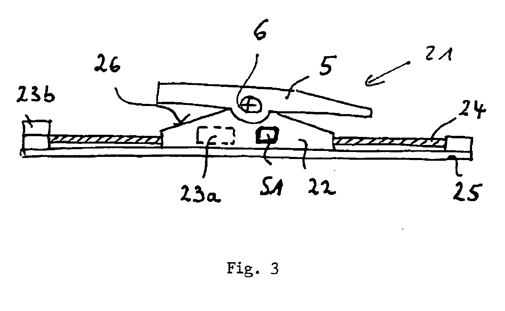

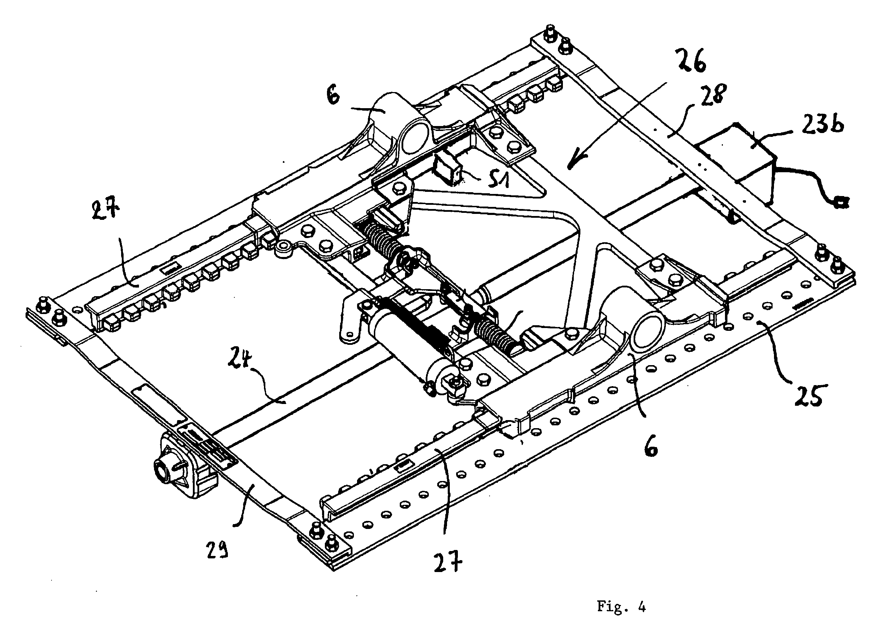

In der Figur 3 ist die Seitenansicht einer Verschiebeeinrichtung 21 schematisch dargestellt. Auf einem Rahmen 25, der auf dem Zugfahrzeug montiert ist, ist ein Schlitten 26 verschiebbar angeordnet. Hierzu sind an einem Rahmen 25 Führungsschienen 27 angeordnet, wie dies in der Figur 4 dargestellt ist. Am Schlitten 26 sind Lagerböcke 6 zur Aufnahme der Sattelkupplung 5 befestigt.

Dieser Schlitten 26 wird von einer Antriebsspindel 24 und einem motorischen Antrieb 23a oder 23b angetrieben, wobei die Antriebsspindel 24 an einer Spindelmutter 22 am Schlitten 26 angreift, die in Figur 4 verdeckt ist. Der motorische Antrieb 23a kann somit auf dem Schlitten 26 oder aber als motorischer Antrieb 23b auf einer Traverse 28 des Rahmens 25 angeordnet sein, wie dies in Figur 4 gezeigt ist. Die Antriebsspindel 24 ist auf einer Traverse 29 des Rahmens 25 drehbar gelagert. Während des Verstellens des Schlittens 26 bleibt der Formschluss zwischen Spindelmutter 22 und Antriebsspindel 24 erhalten, so dass auch ein Verstellen während der Fahrt möglich ist.

Am Schlitten 26 ist ferner ein Positionssensor S1 angebracht, der beispielsweise als induktiver Sensor mit entsprechenden Gegenstücken beispielsweise an der Führungsschiene 27 zusammenwirkt und auf diese Weise die Position des Schlittens 26 auf dem Rahmen 25 bzw. bezüglich der Führungsschiene 27 detektiert. Dieser Positionssensor S1 ist an eine in Figur 3 und 4 nicht dargestellte Steuereinrichtung 40 angeschlossen. Dies gilt auch für die motorische Antriebseinrichtung 23a bzw. 23b, die ebenfalls an die Steuereinrichtung 40 elektrisch angeschlossen ist.

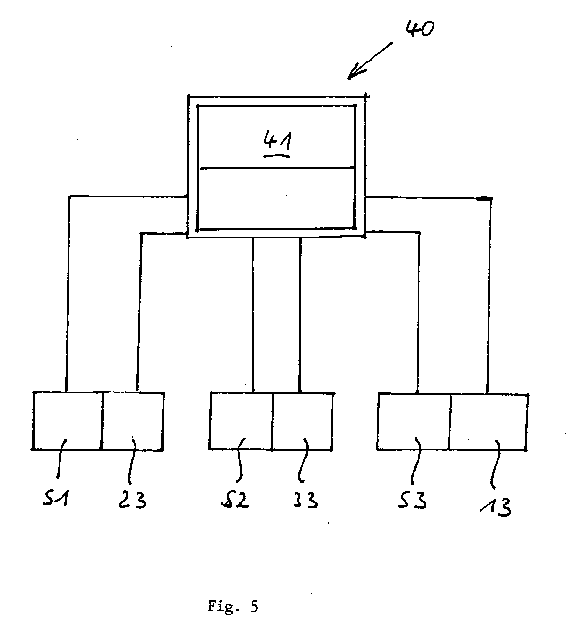

In der Figur 5 ist ein Block-Schaltbild des Steuergerätes dargestellt. An die Steuereinrichtung 40, die eine Anzeigeeinrichtung 41 aufweist, sind Positionssensoren S1, S2 und S3 sowie die entsprechenden Antriebseinrichtung 23, 33 und 13 angeschlossen. Das Steuergerät ist vorzugsweise im Fahrerhaus platziert, so dass der Fahrer auch während der Fahrt sämtliche Informationen an der Anzeigeeinrichtung 41 ablesen kann und gegebenenfalls über die Steuereinrichtung 40 auch eine Verschiebung der Sattelkupplung vornehmen kann. Auch kann das Steuergerät über entsprechende Regelkreise verfügen, so dass eine Verstellung der Antriebseinrichtungen 13, 23 und 33 automatisch erfolgen kann, je nachdem, welche Fahrsituation gegeben ist.

### Bezugszelchenliste

- 1: Zugfahrzeug
- 2: Auflieger
- 3: Zwischenraum
- 4: Dach
- 5: Sattelkupplung
- 6: Lagerbock
- 10a, 10b: Windabweiser
- 13: dritte Antriebseinrichtung
- 20: Verstelleinrichtung
- 21: Verschiebeeinrichtung
- 22: Spindelmutter
- 23a,b: Antriebseinrichtung
- 24: Antriebsspindel
- 25: Rahmen
- 26: Schlitten
- 27: Führungsschiene
- 28: Traverse
- 29: Traverse
- 33: zweite Antriebseinrichtung
- 40: Steuereinrichtung
- 41: Anzeigeeinrichtung
- S1: Positionssensor
- S2: zweiter Positionssensor
- S3: dritter Positionssensor

## Patentansprüche

1. Verstellvorrichtung für eine Sattelkupplung (5) mit einer Verschiebeeinrichtung (21) mit zwei auf einem Fahrzeug, insbesondere auf einer Sattelzugmaschine (1), in dessen Längsrichtung angeordneten Führungsschienen (27) mit einem auf den Führungsschienen (27) verschiebbaren Schlitten (26) und mit einer Betätigungseinrichtung zum Verschieben des Schlittens (26), die beim Verschieben unter Beibehaltung des Formschlusses zwischen einem Rahmen (25) und Schlitten (26) ausgebildet ist, **dadurch gekennzeichnet,**
- **dass** die Betätigungseinrichtung zum Verschieben des Schlittens (26) eine motorische Antriebseinrichtung (23a, 23b) mit mindestens einer Antriebsspindel (24) und einer Spindelmutter (22) umfasst, wobei während des Verstellens des Schlittens (26) der Formschluss zwischen Spindelmutter (22) und Antriebsspindel (24) erhalten bleibt, und
- **dass** mindestens ein Positionssensor (S1) zur Erkennung der Schlittenposition vorgesehen ist, wobei der Positionssensor (S1) und die Antriebseinrichtung (23a, 23b) an eine Steuereinrichtung (40) angeschlossen sind, wobei auch ein Verstellen während der fahrt möglich ist.

2. Vorrichtung nach Anspruch 1, **dadurch gekennzeichnet, dass** die Spindelmutter (22) am Schlitten (26) angeordnet ist.

3. Vorrichtung nach Anspruch 1 oder 2, **dadurch gekennzeichnet, dass** der Positionssensor (S1) ein Abstandssensor oder ein Drehwinkelmesser ist.

4. Vorrichtung nach einem der Ansprüche 1 bis 3, **dadurch gekennzeichnet, dass** mindestens zwei Positionssensoren (S1) an einer Führungsschiene (27) angeordnet sind.

5. Vorrichtung nach einem der Ansprüche 1 bis 4, **dadurch gekennzeichnet, dass** der Positionssensor (S1) ein induktiver Sensor ist.

6. Vorrichtung nach einem der Ansprüche 1 bis 5, **dadurch gekennzeichnet, dass** die Steuereinrichtung (40) eine Kontrolleinrichtung umfasst.

## Claims

1. Adjustment device for a fifth wheel (5) having a displacement device (21) having two guide rails (27) which are arranged on a vehicle, in particular on a semitrailer (1), in the longitudinal direction thereof and which have a carriage (26) which can be displaced on the guide rails (27), and having an activation device for displacing the carriage (26) which is constructed with the positive-locking connection being maintained between a frame (25) and the carriage (26) during displacement, **characterised in that**
- the activation device for displacing the carriage (26) comprises a motorised drive device (23a, 23b) having at least one drive spindle (24) and a spindle nut (22), with the positive-locking connection being maintained between the spindle nut (22) and the drive spindle (24) during the adjustment of the carriage (26), and **in that**
- at least one position sensor (S1) is provided in order to detect the carriage position, with the position sensor (S1) and the drive device (23a, 23b) being connected to a control device (40), with adjustment also being possible during travel.

2. Device according to claim 1, **characterised in that** the spindle nut (22) is arranged on the carriage (26).

3. Device according to claim 1 or claim 2, **characterised in that** the position sensor (S1) is a spacing sensor or a rotary angle measurement device.

4. Device according to any one of claims 1 to 3, **characterised in that** at least two position sensors (S1) are arranged on a guide rail (27).

5. Device according to any one of claims 1 to 4, **characterised in that** the position sensor (S1) is an inductive sensor.

6. Device according to any one of claims 1 to 5, **characterised in that** the control device (40) comprises a monitoring device.

## Revendications

1. Mécanisme de réglage pour une sellette d'attelage (5) avec un dispositif de coulissement (21) comportant deux rails de guidage (27) disposés sur un véhicule, en particulier sur un tracteur pour semi-remorque (1), dans le sens de la longueur de celui-ci, avec un chariot (26) coulissant sur les rails de guidage (27), et avec un dispositif d'actionnement pour le coulissement du chariot (26), prévu pour maintenir l'emboîtement de formes entre un châssis (25) et le chariot (26) pendant le coulissement, **caractérisé**
- **en ce que** le dispositif d'actionnement pour le coulissement du chariot (26) comprend un dispositif d'entraînement motorisé (23a, 23b) avec au moins un arbre d'entraînement (24) et un écrou d'arbre (22), l'emboîtement de formes entre l'écrou d'arbre (22) et l'arbre d'entraînement (24) restant maintenu pendant le déplacement du chariot (26),
- et **en ce qu'**au moins un capteur de position (S1) est prévu pour la détection de position du chariot, ledit capteur de position (S1) et le dispositif d'entraînement (23a, 23b) étant reliés à un dispositif de commande (40), un réglage étant en outre possible en cours de déplacement.

2. Mécanisme selon la revendication 1, **caractérisé en ce que** l'écrou d'arbre (22) est disposé contre le chariot (26).

3. Mécanisme selon la revendication 1 ou la revendication 2, **caractérisé en ce que** le capteur de position (S1) est un capteur de distance ou un instrument de mesure d'angle de rotation.

4. Mécanisme selon l'une des revendications 1 à 3, **caractérisé en ce qu'**au moins deux capteurs de position (S1) sont disposés sur un rail de guidage (27).

5. Mécanisme selon l'une des revendications 1 à 4, **caractérisé en ce que** le capteur de position (S1) est un capteur à induction.

6. Mécanisme selon l'une des revendications 1 à 5, **caractérisé en ce que** le dispositif de commande (40) comprend un dispositif de contrôle.
